**Europäisches Patentamt**

**European Patent Office**

**Office européen des brevets**

(19)

(11) Veröffentlichungsnummer: **0 089 638**

**B1**

(12) # EUROPÄISCHE PATENTSCHRIFT

(45) Veröffentlichungstag der Patentschrift:
04.11.87

(21) Anmeldenummer: **83102695.0**

(22) Anmeldetag: **18.03.83**

(51) Int. Cl.⁴: **F 16 L 37/12**

(54) **Durchgangskupplung für Rohrleitungen oder Schläuche.**

(30) Priorität: **23.03.82 DE 3210558**

(43) Veröffentlichungstag der Anmeldung:
**28.09.83 Patentblatt 83/39**

(45) Bekanntmachung des Hinweises auf die Patenterteilung:
**04.11.87 Patentblatt 87/45**

(84) Benannte Vertragsstaaten:
**BE DE FR GB IT NL SE**

(56) Entgegenhaltungen:
**EP-A-0 024 968**
**AT-B-264 936**
**CH-A-302 653**
**DE-B-1 781 388**
**FR-A-1 528 067**
**GB-A-1 020 540**
**US-A-2 486 120**
**US-A-3 260 539**

(73) Patentinhaber: **DOVER CORPORATION, 277 Park Avenue, New York N.Y. 10172 (US)**

(72) Erfinder: **Skibowski, Hubert, Hüllenkamp 54, D-2000 Hamburg 73 (DE)**

(74) Vertreter: **Dipl.- Ing. H. Hauck Dipl.- Phys. W. Schmitz Dipl.- Ing. E. Graalfs Dipl.- Ing. W. Wehnert Dr.- Ing. W. Döring, Neuer Wall 41, D-2000 Hamburg 36 (DE)**

EP 0 089 638 B1

## Beschreibung

Die Erfindung bezieht sich auf eine Durchgangskupplung für Rohrleitungen oder Schläuche, insbesondere für größere Nennweiten mit einem Mutterkupplungsteil und einem Vaterkupplungsteil, die bündig und dichtend gegeneinanderanlegbare, in zur Rohrachse senkrechter Richtung gegeneinander bewegbare Stirnflächen aufweisen, wobei zumindest eines der beiden Kupplungsteile eine ringförmig umlaufende radiale Haltekante aufweist und mit dem jeweils anderen der beiden Kupplungsteile ein Kupplungsringsegment fest verbindbar ist, das sich über eine Bogenlänge von 180° oder weniger erstreckt und einen radialen Flanschabschnitt aufweist, der die Haltekante des jeweils einen Kupplungsteils hintergreift und einer Verriegelungsvorrichtung, die die Kupplungsteile in der gekuppelten Stellung hält und eine radiale Bewegung des jeweils anderen Kupplungsteils vom Kupplungsringsegment fort verhindert.

Eine derartige Durchgangskupplung ist bekannt (EP-A-00 24 968). Das Mutterkupplungsteil besitzt in der Stirnfläche eine kreisbogenförmige Ausnehmung. Das Vaterkupplungsteil besitzt einen axialen Bund, der passend in der Ausnehmung des Mutterkupplungsteils eingreift. Mit beiden Kupplungsteilen ist jeweils ein Kupplungsringsegment fest verbunden, das sich über eine Bogenlänge von weniger als 180° erstreckt. Die Kupplungsringsegmente besitzen eine im Querschnitt konische Nut, die mit konischen Flächen an der Rückseite der Kupplungsteile zusammenwirken. Beim Verbinden der bekannten Kupplungsteile werden diese zunächst radial gegeneinander geführt, wobei die konischen Flächen den Bund des Vaterkupplungsteils in die Ausnehmung des Mutterkupplungsteils drücken. Am Kupplungsringsegment des Mutterkupplungsteils sind auf gegenüberliegenden Seiten Blattfedern angebracht, die am freien Ende Öffnungen aufweisen, durch die sich Zapfen am Kupplungsringsegment des Vaterkupplungsteils hindurcherstrecken, wenn die Kupplungsteile in Eingriff sind. Eine zusätzliche Spannvorrichtung erfaßt die Kupplungsringsegmente und zieht diese aufeinander zu, um eine dichtende Anlage der Kupplungsstirnflächen zu erhalten. Durch die Anordnung von Kupplungsringsegmenten an beiden Kupplungsteilen müssen diese in Umfangsrichtung zueinander ausgerichtet sein, um eine Verbindung der Kupplungsteile herbeizuführen. Die konischen Flächen erfordern eine genaue Bearbeitung und Relativlage zueinander, damit für eine dichtende Anlage der Kupplungsteile gegeneinander gesorgt ist. Beim Trennen der Kupplungsteile müssen nicht nur die Blattfedern von den Zapfen entfernt werden, sondern auch die Elemente der Spannvorrichtung von den Kupplungsringsegmenten.

Es ist ferner bekannt, zwei Leitungsenden über eine einzige gemeinsame Hülse zu verbinden, die sich um weniger als 360° um den Umfang der Rohrleitung erstreckt und die mit zwei Ringrippen versehen ist, die mit Ringnuten der Rohrenden zusammenwirken (US-PS-2 486 120). Die Kupplungshülse muß elastisch sein, damit sie um die Rohrenden herumgelegt werden kann. Bei der bekannten Kupplung erfolgt keine automatische Verbindung, vielmehr müssen die Rohrenden gegeneinander gehalten werden, damit die Kupplungshülse übergeschoben werden kann.

Bei einer Rohrkupplung mit ineinander steckbaren Kupplungsteilen ist auch bekannt, ein getrenntes Kupplungsringsegment vorzusehen, das mit Rippen in Ringnuten der Kupplungsteile eingreift (FR-A-1 528 067). Das Kupplungsringsegment erstreckt sich über einen Bogen von mehr als 180°. Auch bei dieser Kupplung müssen die Kupplungsteile zunächst ineinandergesteckt werden. Anschließend erfolgt das Aufsetzen des Kupplungsringsegmentes. Der Sitz des Kupplungsringsegmentes an den verbundenen Kupplungsteilen wird durch eine im Kupplungsringsegment sitzenden U-förmigen Feder erzielt, deren Schenkel Flanschen der Kupplungsteile mit einem Bogen von mehr als 180° umschließt und deren nach außen gebogene Schenkelenden mit Ausnehmungen des Kupplungsringsegments zusammenwirken.

Der Erfindung liegt die Aufgabe zugrunde, eine radial verbindbare Durchgangskupplung für Rohrleitungen oder Schläuche zu schaffen, deren Kupplungsteile abhängig von ihrer Drehstellung durch einfache Handgriffe verbindbar und lösbar sind.

Diese Aufgabe wird erfindungsgemäß dadurch gelöst, daß die Stirnflächen der Kupplungsteile eben sind, nur das Mutterkupplungsteil ein Kupplungsringsegment aufweist und die Verriegelungsvorrichtung außerhalb des Kupplungsringsegments mit dem Mutterkupplungsteil verbunden ist und in der Verriegelungsstellung das Vaterkupplungsteil nur gegenüber einer radialen Bewegung relativ zum Mutterkupplungsteil sichert.

Bei der erfindungsgemäßen Durchgangskupplung werden die Kupplungsteile nicht axial zueinander bewegt wie die meisten üblichen Steckkupplungen, um eine Verbindung bzw. eine Trennung herbeizuführen, sondern ausschließlich radial.

Bei gegeneinanderliegenden Stirnflächen der Kupplungsteile greift der Flansch des Kupplungsringsegments hinter die Haltekante des Vater-Kupplungsteils. Die Abdichtung zwischen den Kupplungsteilen erfolgt über die gegeneinanderliegenden ebenen Stirnflächen, die eine metallische Dichtung bilden können. Es können jedoch auch ein oder mehrere Dichtringe in die Stirnfläche des Mutter-Kupplungsteils eingelassen sein. Die Stirnflächen bilden gleichzeitig eine Führung beim Kupplungsvorgang. Es versteht sich, daß die Dichtungen das Entlanggleiten der Stirnflächen gegeneinander nicht verhindern dürfen.

Bei der erfindungsgemäßen Durchgangskupplung ist es gleich, welche Drehlage die Kupplungsteile zueinander haben. Sie können in jeder Drehlage miteinander gekuppelt werden. Dies stellt eine außerordentliche Erleichterung im Betrieb vor allem bei höheren Nennweiten dar. Die axialen Kräfte werden von den Stirnflächen bzw. in entgegengesetzter Richtung von dem Kupplungsringsegment aufgenommen. Die in radialer Richtung wirkenden Kräfte, die normalerweise vom Mediendruck nicht beeinflußt sind, werden zur einen Seite vom Kupplungsringsegment und zur anderen Seite vom Verriegelungselement aufgenommen.

Wie ohne weiteres ersichtlich, ist bei der erfindungsgemäßen Durchgangskupplung das Dichtungsproblem außerordentlich einfach gelöst. Es findet keine wesentliche Beanspruchung der Dichtungen und damit auch so gut wie kein Verschleiß statt. Ein weiterer Vorteil der erfindungsgemäßen Kupplung liegt darin, daß sie ohne weiteres einen geraden molchbaren Durchgang zuläßt, dessen Durchmesser dem Innendurchmesser der zu kuppelnden Leitungen entspricht.

Die seitliche Bewegung der Kupplungsteile hat schließlich auch den Vorteil, daß bei einem teilweisen Lösen festgestellt werden kann, ob sich noch Medium in der Leitung befindet. Dieses tritt dann über einen verhältnismäßig geringen Spalt aus und zeigt der Bedienungsperson an, daß ein Entkuppeln nicht vorgenommen werden kann.

Die Kupplungsteile der erfindungsgemäßen Kupplung können einfache ringförmige Bauteile sein, welche vorzugsweise an den freien Stirnflächen besonders gehärtet sind. Die ringförmigen Kupplungsteile können mit einem Innengewinde versehen sein, damit sie auf das Rohrstück aufgeschraubt werden können. Für das Aufschrauben ist es zweckmäßig, wenn im Außenumfang mehrere beabstandete radiale Löcher eingebracht sind, in die ein Werkzeug eingreifen kann, um die Kupplungsteile auf einen Gewindeabschnitt eines Rohrstücks aufzuschrauben.

Die Bogenlänge des Kupplungsringsegmentes ist vorzugsweise etwa 180°. Eine zu große Bogenlänge läßt die erwünschte Kupplung naturgemäß nicht mehr zu. Eine zu kurze Bogenlänge reicht nicht mehr aus, um die Kupplungsteile gegeneinander zu halten.

Die Haltekante im Vater-Kupplungsteil kann von einem radialen Flansch oder vorzugsweise von einer Ringnut im Vater-Kupplungsteil gebildet sein. Nach einer Ausgestaltung der Erfindung ist die Breite der Nut im Vater-Kupplungsteil größer als die Breite des radialen Flanschabschnitts.

Bei der erfindungsgemäßen Durchgangskupplung kann ein einziges durchgehendes Ringsegment verwendet werden. Alternativ können auch mehrere kleinere Ringsegmente sich über einen Bogen von 180° oder weniger erstrecken, die ggf. durch Lücken unterbrochen sind.

Eine besonders vorteilhafte Ausgestaltung der Erfindung besteht darin, daß die Kupplungsteile identisch ausgebildet sind und das Kupplungsringsegment ein separates Teil ist, das fest mit einem Kupplungsteil verbindbar ist. Auf diese Weise wird der Fertigungsaufwand erheblich verringert. Die Kupplungsringsegmente können aus einteiligen Ringen gebildet werden, die diametral durchschnitten werden.

Das Kreisringsegment ist im Querschnitt vorzugsweise U-förmig mit in den Nuten der Kupplungsteile einsetzbaren Flanken. Die feste Verbindung zwischen einem Kupplungsteil und einem Kupplungsringsegment kann beispielsweise durch Schweißung erfolgen.

Es ist alternativ jedoch auch ohne weiteres möglich, das Kupplungsringsegment als getrenntes Teil auszuführen und wahlweise mit den Kupplungsteilen zusammenzubringen, z. B. mittels eines zweiarmigen Hebels. Sind die Kupplungsteile durch Gegeneinanderlegen der Stirnflächen zusammengebracht, kann anschließend das Ringsegment mit beiden Kupplungsteilen in Eingriff gebracht werden, um die Kupplung zu arretieren. Das vom Hebel betätigte Ringsegment ist von einem Führungsorgan geführt.

Die erfindungsgemäße Kupplung ist vielseitig einsetzbar, etwa in einer Verteilvorrichtung, bei der mehrere Vater-Kupplungsteile stationär so angeordnet sind, daß benachbarte stationäre Kupplungsteile jeweilsgleichen Abstand voneinander haben und ihre Stirnflächen in einer Ebene liegen und bei der zwei Mutter-Kupplungshälften mit Kreisringsegmenten an den Enden eines 180°-Verteilerrohrbogens angebracht sind und einen Abstand voneinander haben, der dem Abstand benachbarter stationärer Kupplungsteile entspricht. Bei einem derartigen Verteiler kann ein "Feld" von stationären Kupplungsteilen an einer geeigneten Haltevorrichtung angebracht sein, wobei jedes Kupplungsteil mit einem Schlauch oder einer Rohrleitung verbunden ist. Mit Hilfe des Verteilerrohrbogens können jeweils benachbarte Kupplungsteile miteinander verbunden werden. Zu diesem Zweck hat der Rohrbogen an den Enden ebenfalls Kupplungsteile, die mit Hilfe des Ringsegmentes mit den stationären Kupplungsteilen zusammengebracht werden.

Alternativ kann die Kupplung nach der Erfindung auf eine Verteilvorrichtung angewendet werden, bei der mehrere stationäre Vater-Kupplungsteile auf einem Kreisbogen angeordnet sind, deren Stirnflächen in einer Ebene liegen, bei der im Kreismittelpunkt ein weiteres Kupplungsteil stationär angeordnet ist, das ständig mit einem weiteren Kupplungsteil drehbar gekuppelt ist, das am Ende eines 180°-Rohrbogens angebracht ist, wobei am anderen freien Ende des Rohrbogens ein Mutter-Kupplungsteil angebracht ist, das wahlweise mit einem der stationären Vater-Kupplungsteile verbindbar ist. Bei einer derartigen Ausführung ist die mittlere Kupplung gleichzeitig als Drehgelenk für den Rohrbogen ausgebildet.

Die zuletzt beschriebene Verteilvorrichtung eignet sich insbesondere für eine mechanische Verstellung des Rohrbogens. Er kann mit einer Scheibe verbunden sein, die am Außenumfang eine Zahnung aufweist für den Eingriff mit einem Antriebsritzel oder einer Antriebskette. Mit dem Rohrbogen kann alternativ eine Dichtscheibe verbunden sein, die sich gegen die jeweils offenen stationären Kupplungsteile anlegt, um zu verhindern, daß diese verunreinigen oder daß versehentlich über diese Medium nach außen tritt.

Zur weiteren Veranschaulichung der Erfindung wird nun die Durchgangskupplung in ihrer Anwendung auf Verteilvorrichtungen anhand von Zeichnungen näher erlautert.

Fig. 1 zeigt die erste Ausführungsform einer Verteilvorrichtung mit einer Durchgangskupplung nach der Erfindung.

Fig. 2 zeigt eine zweite Ausführungsform einer Verteilvorrichtung mit einer Durchgangskupplung nach der Erfindung.

Fig. 3 zeigt einen ergänzenden Teil im Schnitt zur Verteilvorrichtung nach Fig. 2.

Fig. 4 zeigt einen Schnitt durch die Darstellung nach Fig. 2 entlang der Linie 4-4.

Fig. 5 zeigt schematisch eine Vorderansicht der Verteilvorrichtung nach Fig. 1.

Fig. 6 zeigt einen Schnitt durch eine alternative Ausgestaltung der erfindungsgemäßen Kupplung.

Fig. 7 zeigt einen Schnitt durch die Darstellung nach Fig. 6 entlang der Linie 7-7.

Fig. 8 zeigt das Verriegelungselement nach Fig. 6 im Längsschnitt.

Fig. 9 zeigt das Verriegelungselement nach Fig. 8 in Draufsicht.

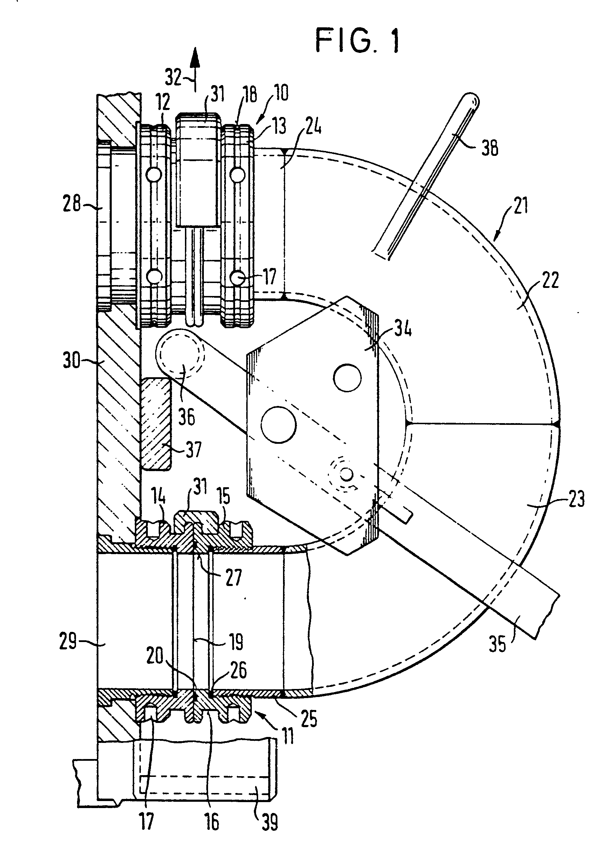

In Fig. 1 sind zwei Durchgangskupplungen 10, 11 dargestellt mit Kupplungsteilen 12, 13 bzw. 14, 15. Die ringförmig aufgebauten Kupplungsteile 12 bis 15 sind identisch geformt und haben an der Außenseite eine Nut 16. Ferner haben sie an der Außenseite in gleichmäßigen Umfangsabständen Sacklöcher 17 und eine umlaufende keilförmige Nut 18 in der Ebene der Sacklöcher 17. Die Kupplungsteile 12 bis 15 haben ebene Stirnflächen 19, wobei an einer Stirnfläche eine Dichtung eingelassen ist wie bei 20 angedeutet.

Die Mutter-Kupplungsteile 13 und 15 sind an den Enden eines allgemein mit 21 bezeichneten Rohrbogens angebracht. Der Rohrbogen 21 ist aus zwei 90°-Bögen 22, 23 zusammengesetzt. An die Enden der 90°-Bögen 22, 23 sind gerade Rohrstücke 24, 25 angeschweißt. Die Mutter-Kupplungsteile 13, 15 sind mittels eines Innengewindeabschnitts auf einen Außengewindeabschnitt der Rohrstücke 24 bzw. 25 aufgeschraubt. Wie man beim Kupplungsteil 15 erkennt, endet der Innengewindeabschnitt an einer radialen Schulter, gegen die ein Dichtring 26 gelegt ist. Wie man in der unteren Darstellung erkennt, hat der gerade Durchgang 27 der Kupplungsteile den gleichen Durchmesser wie der Innendurchmesser des Rohrbogens 21.

Rohrabschnitte 28, 29 sind in Öffnungen einer Platte 30 gehalten. Ihr zum Rohrbogen 21 überstehender Abschnitt weist einen Außengewindeabschnitt auf, auf den die Innengewindeabschnitte der Vater-Kupplungsteile 12 und 14 aufgeschraubt sind.

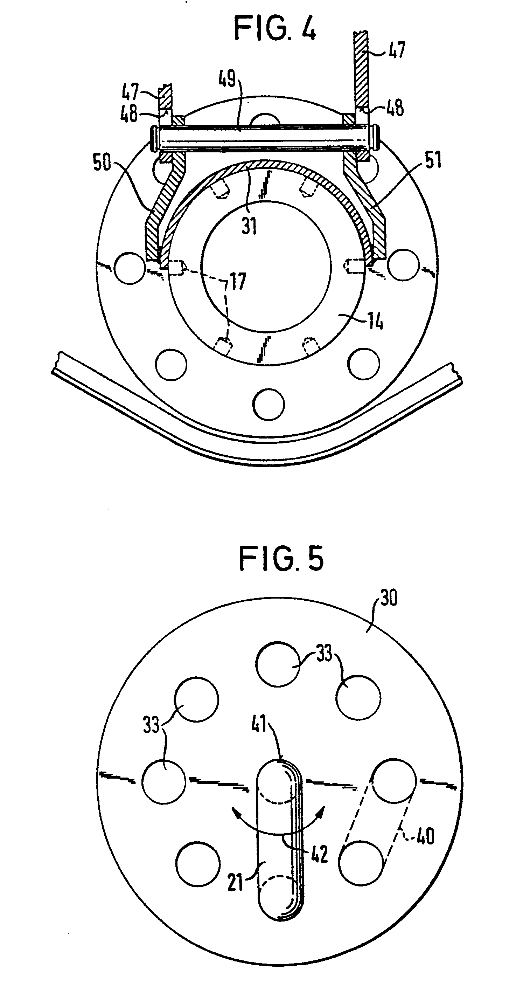

Wie aus Fig. 1 erkennbar, sind die Kupplungsteile 12, 13 bzw. 14, 15 miteinander verbunden, wobei ihre hartverchromten Stirnflächen 27 gegeneinanderliegen. Ein halbkreisförmiges Kupplungsringsegment 31 von U-förmigem Querschnitt sitzt mit seinen Schenkeln in den Nuten 16 ein und sichert mithin die Kupplungsteile 12 bis 15 axial. Wie man in der unteren Darstellung erkennt, ist der eine Schenkel des Ringsegmentes 31 dicker als der andere. Der dickere Schenkel ist mit dem zugeordneten Mutter-Kupplungsteil 13 bzw. 15 verbunden, beispielsweise durch Verschweißung. Der andere Schenkel des Ringsegments 31 greift frei in die zugeordnete Nut 16 des Vater-Kupplungsteils 12, 14 ein. Wie man ohne weiteres erkennt, können die Kupplungen 10, 11 nur getrennt werden, wenn der Rohrbogen 21 mit den Mutter-Kupplungsteilen 13, 15 nach oben in Richtung des Pfeils 32 bewegt wird. Dadurch gelangen die dünneren Schenkel des Ringes 31 mit den Nuten 16 der Vater-Kupplungsteile 12, 14 außer Eingriff, und der Rohrbogen 21 kann entfernt werden. Aus Fig. 5 ist ersichtlich, daß in die Platte 30 eine Vielzahl von stationären Vater-Kupplungsteilen 33 angeordnet ist mit gleichem Abstand voneinander, der dem Abstand der Kupplungsteile am Rohrbogen 21 entspricht. Mit Hilfe des Rohrbogens 21 können daher jeweils benachbarte Anschlüsse miteinander verbunden werden.

In Fig. 1 ist der Rohrbogen 21 mit einer Platte 34 verbunden, die einen Hebel 35 schwenkbar lagert. Im Schwenkbereich des freien Endes 36 des Hebels 35 liegt ein Anschlag 37, der an der Platte 30 befestigt ist. Ein Verschwenken des Hebels 35 entgegengesetzt dem Uhrzeigersinn führt mithin zu einem Anheben des Rohrbogens 21 und der zugeordneten Kupplungsteile 13, 15, so daß die Verbindung zwischen den Anschlüssen 28 und 29 aufgehoben werden kann. Mit Hilfe eines am Rohrbogen 21 angebrachten Bügels 38 kann der Rohrbogen 21 leichter gehandhabt werden.

Aus Gründen der Verschleißsicherung sind auch diejenigen Abschnitte der Kupplungsteile 12 bis 15 hartverchromt, welche mit dem Kupplungsringsegment 31 in Berührung gelangen.

Mit der Platte 30 ist auch eine Abdeckung 39 für die Kupplungen an der Platte 30 angebracht.

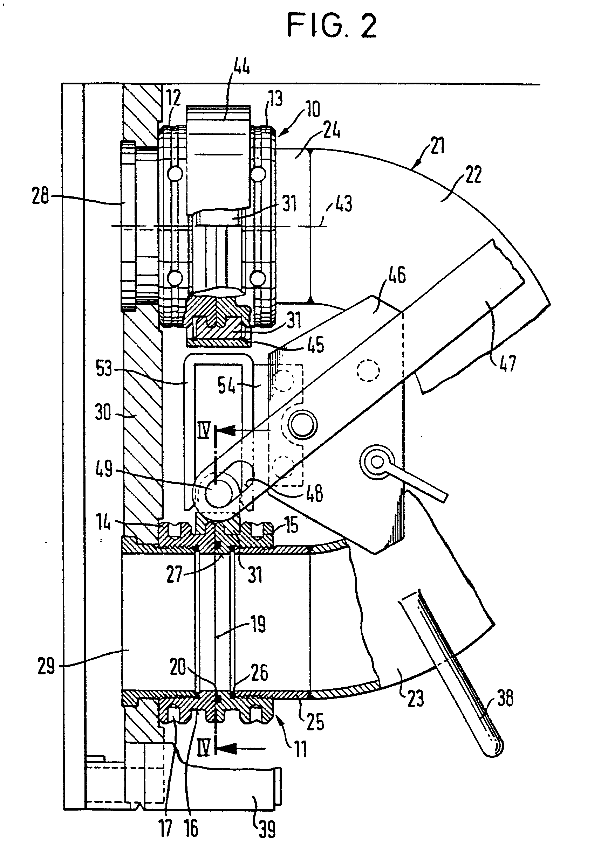

Wie man Fig. 5 entnehmen kann, kann der Rohrbogen 21 beliebig auf der Platte 30 verstellt werden, um benachbarte Anschlüsse miteinander zu verbinden. Dies ist beispielsweise durch die gestrichelte Linie bei 40 angedeutet. Alternativ kann der Rohrbogen 21 auch um einen mittigen Anschluß 41 gedreht werden, wie durch den Doppelpfeil 42 angedeutet. Eine derartige Verteilvorrichtung ist in den Figuren 2 bis 4 wiedergegeben. Soweit bezüglich der Kupplungen identische Teile zur Ausführungsform nach Fig. 1 vorliegen, sind sie mit den gleichen Bezugszeichen versehen. Ein Unterschied gegenüber der Ausführungsform nach Fig. 1 liegt darin, daß die obere Kupplung als Drehgelenk geformt ist, wodurch der Rohrbogen 21 um die Achse 43 verschwenkbar ausgestaltet ist. Zu diesem Zwecke sind zwei halbkreisförmige Ringsegmente 31 in die Nuten 16 eingesetzt und von einem passenden Haltering 44 umgeben, an dessen Innenseite axial beabstandet zwei Federringe 45 eingelassen sind die gegen die Stirnseiten der Ringsegmente 31 anliegen und dadurch ein Abrutschen des Halterings verhindern.

An dem Rohrbogen 21 ist wiederum eine Platte 46 angebracht, die einen Hebel 47 schwenkbar lagert. Am unteren freien Ende des Hebels, der gabelartig geformt ist, wie in Fig. 4 dargestellt, sind Langlöcher 48 geformt, durch die sich ein Stift 49 hindurcherstreckt, der in ausgerichteten Öffnungen von gekröpften Ansätzen 50 bzw. 51 aufgenommen ist, die mit dem Ringsegment 52 verschweißt sind. Wird der Hebel 47 im Uhrzeigersinn verschwenkt, hebt er den Stift 49 und damit das Ringsegment 52 an, wodurch die Kupplungsteile 14, 15 voneinander getrennt sind. Bei dieser Bewegung wird das Ringsegment 31 in einer umgekehrt U-förmigen Führung 53 geführt, die auch das genaue Wiederanbringen des Ringsegmentes 31 beim erneuten Kuppeln sichert. Die Führung 53 ist an einem Plattenabschnitt 54 angebracht, der mit der Platte 46 verschraubt wird.

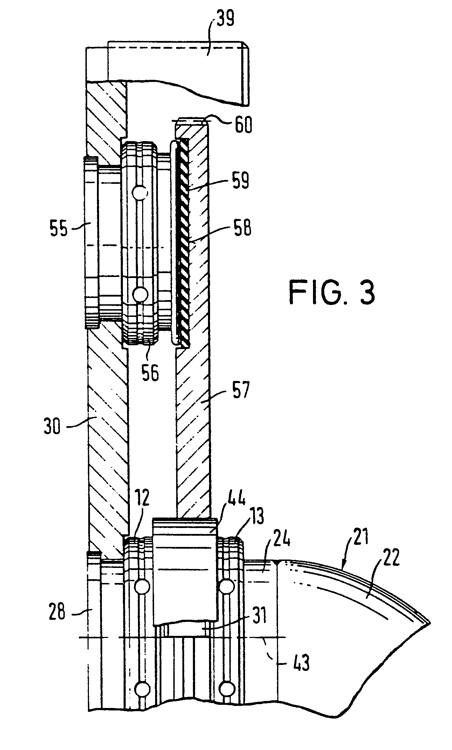

In Fig. 3 ist in der Platte 30 ein weiterer Anschluß 55 in Form eines Rohrstücks dargestellt mit einem Kupplungsteil 56, das mit den übrigen Kupplungsteilen 12 identisch ist. Es soll daher im Aufbau auch nicht näher beschrieben werden. Mit dem Rohrbogen 22 ist auf nicht näher dargestellte Weise eine Scheibe 57 verbunden, die auf einem Kreisbogen angeordnet mehrere umfangsmäßig beabstandete Ausnehmungen 58 aufweist, in denen ein Dichtmaterial 59 aufgenommen ist. Die Ausnehmungen 58 liegen auf demselben Kreis wie die Anschlüsse mit den stationären Kupplungsteilen und sind zu diesen ausgerichtet. Lediglich der Bereich der Kupplungshälfte 15 am Ende des Rohrbogens 21 ist in der Scheibe 57 ausgespart. Wird nun dieser Kupplungsteil 15 mit einem der stationären Kupplungsteile an der Platte 30 in Verbindung gebracht, werden die übrigen Kupplungsteile durch die Scheibe 57 mit den Dichtelementen 59 abgedichtet, wie in Fig. 3 in Verbindung mit dem Kupplungsteil 56 dargestellt.

Die Scheibe 57 ist am Umfang gezahnt, wie bei 50 dargestellt. Mit dieser Zahnung kann ein Antriebsritzel oder eine Antriebskette in Eingriff sein, um die Scheibe 57 in Drehung zu versetzen und damit gleichzeitig auch den Rohrbogen 21.

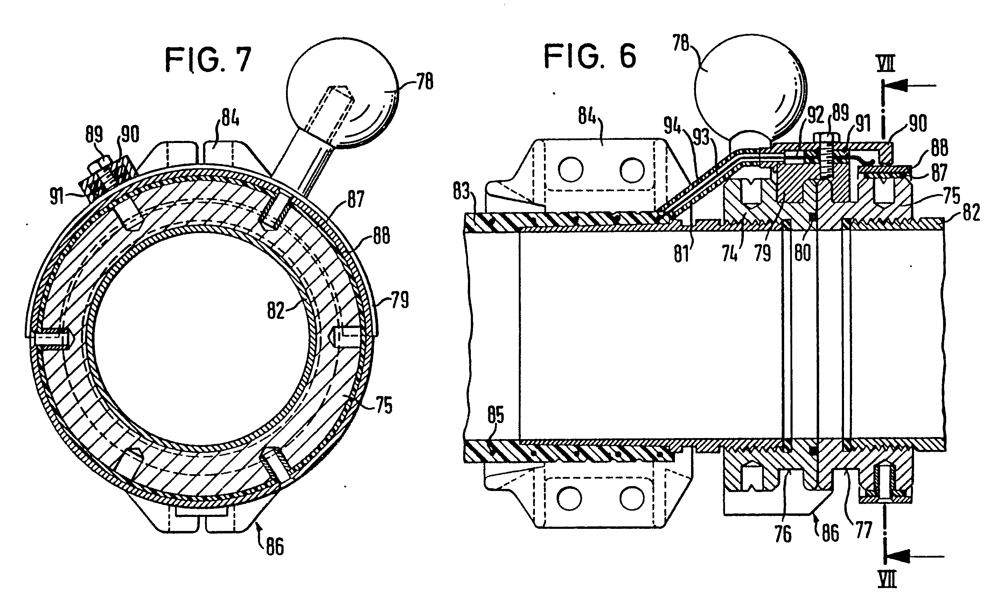

Bei der Ausführungsform nach den Figuren 6 und 7 ist eine molchbare Durchgangskupplung gezeigt mit einem Mutterkupplungsteil 74 und einem Vaterkupplungsteil 75. Beide Kupplungsteile haben Ringnuten 76, 77. In eine Sackbohrung des Mutterkupplungsteils 74 ist ein Griff 78 geschraubt. Ein Kupplungsringsegment 79 von U-förmigem Querschnitt sitzt mit einem Schenkel in der Nut 76 und ist, beispielsweise durch Schweißung mit dem Mutterkupplungsteil 74 fest verbunden. Es erstreckt sich etwa um 180° Umfangsbogen des Mutterkupplungsteils 74 (siehe Fig. 7). Die Stirnflächen der Kupplungsteile 74, 75 liegen bündig aneinander, wobei in die Stirnfläche des Mutterkupplungsteils 74 eine Dichtung 80 eingelassen ist. Tüllen 81, 82 sind in die Kupplungsteile 74, 75 eingeschraubt. Auf die Tülle 81 ist ein Schlauch 83 mit Hilfe einer geteilten Schelle 84 aufgepreßt. Der Schlauch enthält eine Stahlspirale 85. Außerhalb des Bereichs des Kupplungsringsegments 79 ist ein Verriegelungsschnapper 86 am Mutterkupplungsteil 74 angebracht. Er ist parallel zur Kupplungsachse verschiebbar und durch eine nicht gezeigte Feder in die Verriegelungsstellung vorgespannt. In der Verriegelungsstellung greift er über die Vorderkante des Vaterkupplungsteils 75, wobei eine Kante des Verriegelungselements 86 gegen eine Wand der Nut 76 anliegt. In der in Fig. 6 dargestellten Stellung kann eine Trennung der Kupplungsteile 74, 75 nicht vorgenommen werden.

Auf einem Ringabschnitt des Vaterkupplungsteils 75 ist ein Isolierring 87 befestigt, auf dem ein Kontaktring 88 angebracht ist. Mit Hilfe einer Schraube 89 ist eine Deckelplatte 90 mit dem Ringsegment 79 verschraubt. Durch die Deckelplatte 90 ist gleichzeitig mit Hilfe der Schraube 89 eine Isolierplatte 91 gegen die Außenseite des Ringsegments 79 festgelegt. Die Deckelplatte 90 bildet mit der Außenseite des Ringsegments 79 einen Hohlraum, der sich durch entsprechende Bemessung der Deckelplatte 90 über den Kontaktring 88 erstreckt, wenn die Kupplungsteile 74, 75 miteinander verbunden sind. Er nimmt eine Kontaktfeder 92 auf, deren freies Ende mit dem Kontaktring 88 in Eingriff ist. Die Kontaktfeder 92 ist mit einem Anschlußleiter 93 verbunden, der in einem Isolierrohr 94 geführt ist, das sich zwischen einer Öffnung am hinteren Ende der Deckelplatte 90 und der Scheibe 84 erstreckt. Der Anschlußleiter 93 ist mit der Stahlspirale 85 verbunden. Eine Verbindung der Kupplungsteile miteinander ergibt automatisch eine elektrische Verbindung zwischen Kontaktring und Kontaktstift bzw. Kontaktfeder. Die Kupplungsteile selbst sind auch dann spannungsfrei, wenn im Prüffall ein Strom fließt. Ein Stromkreis kann hergestellt werden durch Anschluß einer Stromquelle, z. B. Schwachstromquelle, an die Stahlspirale 85 und den Kontaktring 88. Der Stromfluß zeigt an, daß die Kupplungsteile 74, 75 miteinander verbunden sind. Die gezeigte Ausführungsform ermöglicht daher die Überprüfung von Leitungsverbindungen, die mit den Kupplungsteilen 74, 75 hergestellt werden. Durch Kontrolle dieser Art wird vermieden, daß bei mehreren identischen Kupplungsteilen 74, 75 eine Fehlverbindung zustande kommt oder unentdeckt bleibt.

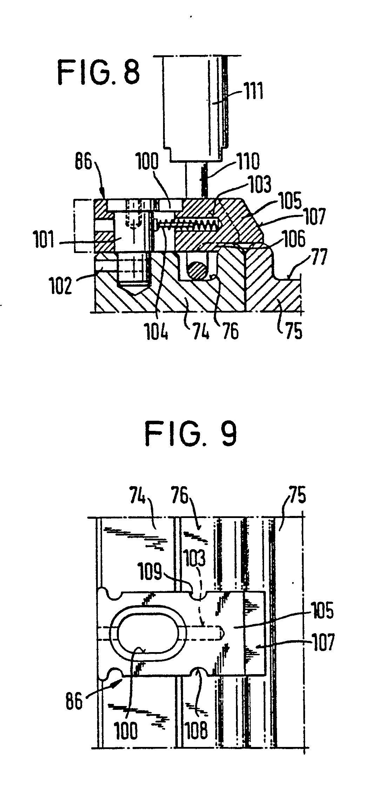

Die Fig. 8 und 9 zeigen Aufbau und Wirkungsweise des Verriegelungselements 86. Das plattenförmige Element 86 hat ein Langloch 100, mit einer Erweiterung im oberen Bereich zur Aufnahme des Kopfes eine Stiftes 101, der in eine der Sackbohrungen des Mutterkupplungsteils 74 geschraubt wird. Ein von der Rückseite des Mutterkupplungsteils eingesetzter Stift 102 sichert den Stift 101 axial. Ein Sackloch 103 erstreckt sich vom Inneren des Langloches 100 senkrecht zu dessen Achse in Längsrichtung des Elements 86 zur Aufnahme einer Feder 104, die sich am anderen Ende am Stift 102 abstützt. Das Verriegelungselement 86 ist in einer Ausnehmung des Mutterkupplungsteils 74 parallel zu dessen Achse geführt und von einer Feder 104 in die gezeigte Verriegelungsstellung vorgespannt. In dieser übergreift ein Verriegelungsabschnitt 105 den Rand des Vaterkupplungsteils, wobei eine Schulter 106 an der Unterseite des Verriegelungsabschnitts 105 gegen die Wand der Nut 76 anliegt. Die Entriegelungsstellung ist in Fig. 8 in strichpunktierter Linie dargestellt.

Beim Verbinden der Kupplungsteile 74, 75 kann das Verriegelungselement 86 durch Anlage an die Stirnfläche des Vaterkupplungsteils 75 automatisch in die Entriegelungsstellung gebracht werden, was durch die Anschrägung 107 am vorderen Ende des Verriegelungsabschnitts 105 noch erleichtert wird. Sobald die Kupplungsteile 74, 75 verbunden sind, schnappt das Verriegelungselement 86 in die Verriegelungsstellung.

In Höhe der Nut 76 hat das Verriegelungselement 86 an beiden Seiten Einkerbungen 108, 109. Sie dienen zur Aufnahme der Schenkel eines Bügels 110 eines Schlosses 111 (Fig. 8). Der Bügel 110 untergreift das Verriegelungselement 86 durch den mittels der Nut 76 gebildeten Spalt. Dadurch kann die Verbindung der Kupplungsteile 74, 75 nur dann aufgehoben werden, wenn das Schloß 111 entfernt wird.

Es versteht sich, daß das Kupplungsringsegment der erfindungsgemäßen Kupplung aus einem geeigneten Material wie Stahl, Kunststoff usw. bestehen kann, wobei das Material im wesentlichen starr ist.

## Patentansprüche

1. Durchgangskupplung für Rohrleitungen oder Schläuche, insbesondere für größere Nennweiten mit einem Mutterkupplungsteil (13, 15) und einem Vaterkupplungsteil (12, 14), die bündig und dichtend gegeneinanderanlegbare, in zur Rohrachse senkrechter Richtung gegeneinander bewegbare Stirnflächen (19) aufweisen, wobei zumindest eines der beiden Kupplungsteile eine ringförmig umlaufende radiale Haltekante aufweist und mit dem jeweils anderen der beiden Kupplungsteile ein Kupplungsringsegment (31) fest verbindbar ist, das sich über eine Bogenlange von 180° oder weniger erstreckt und einen radialen Flanschabschnitt aufweist, der die Haltekante des jeweils einen Kupplungsteils (12, 14; 13, 15) hintergreift, und einer Verriegelungsvorrichtung (86), die die Kupplungsteile in der gekuppelten Stellung hält und eine radiale Bewegung des jeweils anderen Kupplungsteils (12, 14; 13, 15) vom Kupplungsringsegment (31) fort verhindert, dadurch gekennzeichnet, daß die Stirnflächen (19) der miteinander zusammenwirkenden Kupplungsteile (13, 15; 12, 14) in einer einzigen Ebene liegen nur das Mutterkupplungsteil (13, 15) ein Kupplungsringsegment (31) aufweist und die Verriegelungsvorrichtung (86) außerhalb des Kupplungsringsegments (31) mit dem Mutterkupplungsteil (13, 15) verbunden ist und in der Verriegelungsstellung das Vaterkupplungsteil (12, 14) nur gegenüber einer radialen Bewegung relativ zum Mutterkupplungsteil (13, 15) sichert.

2. Kupplung nach Anspruch 1, dadurch gekennzeichnet, daß die Haltekante von einer Ringnut (16) im Vaterkupplungsteil (12, 14) gebildet ist.

3. Kupplung nach Anspruch 2, dadurch gekennzeichnet, daß die Breite der Nut (16) im Vaterkupplungsteil (12, 14) größer ist als die Breite des radialen Flanschabschnitts.

4. Kupplung nach einem der Ansprüche 1 bis 3, dadurch gekennzeichnet, daß die Kupplungsteile (12 bis 15, 56) identisch ausgebildet sind und das Kupplungsringsegment (31) ein separat geformtes Teil ist, das fest mit einem Kupplungsteil verbindbar ist.

5. Kupplung nach Anspruch 4, dadurch gekennzeichnet, daß das Kupplungsringsegment (31) im Querschnitt U-förmig ist mit in den Nuten (16) der Kupplungsteile einsetzbaren Flanken.

6. Kupplung nach einem der Ansprüche 1 bis 5, dadurch gekennzeichnet, daß das Kupplungsringsegment (31) mit einer Betätigungsvorrichtung (47 bis 51) verbunden ist zwecks wahlweisen Eingriffs in die Nuten (16) der zusammengeführten Kupplungsteile.

7. Kupplung nach Anspruch 6, dadurch gekennzeichnet, daß das Kupplungsringsegment (31) an einem zweiarmigen Hebel (47) angelenkt ist, der Hebel (47) ein Langloch (48) aufweist, durch den ein Stift (49) hindurchgeführt ist, der mit mindestens einem Befestigungsansatz (50, 51) des Kupplungsringsegments (31) verbunden ist, und ein Führungsorgan (53) vorgesehen ist, das das Kupplungsringsegment (31) bei seiner Bewegung von den Kupplungsteilen fort bzw. auf diese zu führt.

8. Kupplung nach einem der Ansprüche 1 bis 7, gekennzeichnet durch ihre Anwendung auf eine Verteilvorrichtung, bei der mehrere Vaterkupplungstelle (12, 14) stationär so angeordnet sind, daß benachbarte stationäre Kupplungsteile jeweils gleichen Abstand voneinander haben und ihre Stirnflächen (19) in einer Ebene liegen und bei der zwei Mutterkupplungsteile (13, 15) mit Kupplungsringsegmenten (31) an den Enden eines 180°-Verteilerrohrbogens (21) angebracht sind und einen Abstand voneinander haben, der dem Abstand benachbarter stationärer Vaterkupplungsteile (12, 14) entspricht.

9. Kupplung nach einem der Ansprüche 1 bis 7, gekennzeichnet durch ihre Anwendung auf eine Verteilvorrichtung, bei der mehrere stationäre Vaterkupplungsteile (12, 14, 56) auf einem Kreisbogen angeordnet sind, deren Stirnflächen (19) in einer Ebene liegen, bei der im Kreismittelpunkt ein weiteres Kupplungsteil stationär angeordnet ist, das ständig mit einem weiteren Kupplungsteil drehbar gekuppelt ist, das am Ende eines 180°-Rohrbogens (21) angeordnet ist, wobei am anderen freien Ende des Rohrbogens ein Mutterkupplungsteil angebracht ist, das wahlweise mit einem der stationären Vaterkupplungsteile verbindbar ist.

10. Kupplung nach Anspruch 9, dadurch gekennzeichnet, daß die Kupplungsteile der mittigen Kupplung mittels zweier Kreisringsegmente (31) gekoppelt sind, auf die ein Haltering (44) aufgeschoben ist, der gegen axiale Verschiebung gesichert ist.

11. Kupplung nach Anspruch 10, dadurch gekennzeichnet, daß mit dem Rohrbogen (21) eine Scheibe (57) verbunden ist, die am Außenumfang eine Zahnung (60) aufweist für den Eingriff mit einem Antriebsritzel oder einer Antriebskette.

12. Kupplung nach Anspruch 10 oder 11, dadurch gekennzeichnet, daß die Antriebsscheibe (57) gleichzeitig eine Dichtscheibe ist, die sich gegen die jeweiligen offenen stationären Vaterkupplungsteile (56) anlegt.

13. Kupplung nach Anspruch 1, dadurch gekennzeichnet, daß das Verriegelungselement diametral gegenüber dem Kupplungsringsegment (79) an der Außenseite des Mutterkupplungsteils (74) parallel zur Kupplungsachse beweglich gelagert und mittels einer Feder in eine Verriegelungsstellung vorgespannt ist, in der ein Verriegelungsabschnitt über die Stirnseite des Mutterkupplungsteils (74) übersteht.

14. Kupplung nach Anspruch 1, dadurch gekennzeichnet, daß ein mit einer elektrischen Leitung (85) verbundener Anschlußleiter (93) isoliert am Kupplungsringsegment (79) angebracht ist, ein Kontaktring (88) isoliert auf dem Vaterkupplungsteil (75) angebracht ist und ein mit dem Anschlußleiter verbundener Kontakt (92) mit dem Kontaktring (88) in Berührung ist, wenn die Kupplungsteile (74, 75) verbunden sind.

15. Kupplung nach Anspruch 14, dadurch gekennzeichnet, daß eine Gehäuseplatte (90, 100) an der Außenseite des Kupplungsringsegments (79) angebracht ist, die isolierend eine Kontaktfeder (92, 105) gegenüber dem Kupplungsringsegment (79) festlegt.


**Claims**

1. Through coupling for pipelines or hoses, in particular for larger nominal widths, comprising a maternal coupling member (13, 15) and a paternal coupling member (12, 14) which have end faces (19) placeable against one another in a flush and sealing manner and movable with respect to each other in a direction vertical to the pipe axis, at least one of said two coupling members including an annularly extending radial holding edge, and the other one of the two coupling members being adapted to have fixedly connected thereto a coupling ring segment (31) extending through an arc length of 180° or less and having a radial flange portion engaging the holding edge of the respective one coupling member (12, 14; 13, 15), and a locking means (86) retaining the coupling members in the coupled position and preventing a radial movement of the respective other coupling member (12, 14; 13, 15) away from the coupling ring segment (31), characterized in that the end faces (19) of the co-operating coupling members (13, 15; 12, 14) lie in a single plane, that only the maternal coupling member (13, 15) includes a coupling ring segment (31), and that the locking means (86) is connected to the maternal coupling member (13, 15) outside of the coupling ring segment (31) and in the locking position secures the paternal coupling member (12, 14) only with respect to a radial movement relative to the maternal coupling member (13, 15).

2. Coupling as in claim 1, characterized in that the holding edge is formed by an annular groove (16) in the paternal coupling member (12, 14).

3. Coupling as in claim 2, characterized in that the width of the groove (16) in the paternal coupling member (12, 14) is larger than the width of the radial flange portion.

4. Coupling as in any of claims 1 to 3, characterized in that the coupling members (12 to 15, 56) are formed identically, and that the coupling ring segment (31) is a separately formed member which is fixedly connectable to a coupling member.

5. Coupling as in claim 4, characterized in that the coupling ring segment (31) is U-shaped in cross-section and has flanks insertable in the grooves (16) of the coupling members.

6. Coupling as in any of claims 1 to 5, characterized in that the coupling ring segment (31) is connected to an operating means (47 to 51) for selective engagement in the grooves (16) of the joined coupling members.

7. Coupling as in claim 6, characterized in that the coupling ring segment (31) is hinged to a double-armed lever (47), that the lever (47) has an elongated hole (48) penetrated by a pin (49) connected to at least one fastening projection (50, 51) of the coupling ring segment (31), and that a guide element (53) is provided to guide the coupling ring segment (31) upon movement thereof respectively away from and towards the coupling members.

8. Coupling as in any of claims 1 to 7, characterized by the use thereof in a distributing device, wherein a plurality of paternal coupling members (12, 14) are arranged stationarily such that adjacent stationary coupling members are each equi-spaced from one another, with their end faces (19) lying in a plane, and wherein two maternal coupling members (13, 15) with coupling ring segments (31) are secured at the ends of a 180°-distributor pipe bend (21) and have a spacing therebetween which corresponds to the spacing of adjacent stationary paternal coupling members (12, 14).

9. Coupling as in any of claims 1 to 7, characterized by the use thereof in a distributing device, wherein a plurality of paternal coupling members (12, 14, 56) are arranged on a circular arc and have their end faces (19) lie in a plane, wherein a further coupling member is disposed stationarily in the center of the circle and permanently coupled rotatably to a further coupling member which is arranged at the end of a 180°-pipe bend (21), the other free end of the pipe bend having attached thereto a maternal coupling member which is selectively connectable to one of the stationary paternal coupling members.

10. Coupling as in claim 9, characterized in that the coupling members of the central coupling are coupled via two circular ring segments (31) having telescoped thereon a holding ring (44) secured against an axial displacement.

11. Coupling as in claim 10, characterized in that the pipe bend (21) has connected thereto a disc (57) having at the outer periphery a toothing (60) for engagement with a driving pinion or a driving chain.

12. Coupling as in claim 10 or 11, characterized in that the driving disc (57) is simultaneously a sealing washer abutting against the respective open stationary paternal coupling members (56).

13. Coupling as in claim 1, characterized in that the locking element is movably mounted diametrically opposite the coupling ring segment (79) at the outer side of the maternal coupling member (74) in parallel to the coupling axis and biased via a spring to a locking position in which a locking portion protrudes beyond the end face of the maternal coupling member (74).

4. Coupling as in claim 1, characterized in that a connecting conductor (93) connected to an electrical lead (85) is insulatedly attached to the coupling ring segment (79), that a contact ring (88) is insulatedly attached to the paternal coupling member (75), and that a contact (92) connected to the connecting conductor (93) is in engagement with the contact ring (88) when the coupling members (74, 75) are joined.

15. Coupling as in claim 14, characterized in that the outer side of the coupling ring segment (79) has secured thereto a housing plate (90,100) which insulatingly fixes a contact spring (92, 105) with respect to the coupling ring segment (79).

**Revendications**

1. Raccord de passage pour tuyaux rigides ou souples, en particulier de grand diamètre, comprenant une pièce d'accouplement mère (13, 15) et une pièce d'accouplement père (12, 14) qui présentent des surfaces frontales (19) qui peuvent être appliquées l'une contre l'autre de façon serrée et étanche et qui peuvent être déplacées l'une par rapport à l'autre dans une direction perpendiculaire aux tuyaux, au moins une des deux pièces d'accouplement présentant un bord de prise de forme circulaire qui l'entoure radialement, et un segment circulaire d'accouplement (31) pouvant être relié solidement à l'autre pièce d'accouplement, ce segment s'étendant sur un arc de cercle de 180° ou moins et présentant une section de bride radiale qui agrippe par derrière ledit bord de prise de la première pièce d'accouplement (12, 14; 13, 15), et un dispositif de verrouillage (86) qui maintient les pièces d'accouplement en position de couplage et empêche un déplacement radial tel qu'une des pièces d'accouplement (12, 14; 13, 15) s'échapperait du segment d'accouplement (31), caractérisé en ce que les faces frontales (19) des pièces d'accouplement (13, 15; 12, 14) qui coopèrent l'une avec l'autre sont dans un plan unique, seule la pièce d'accouplement mère (13, 15) porte un segment circulaire d'accouplement (31), le dispositif de verrouilage (86) est lié à la pièce d'accouplement mère (13, 15) en dehors du segment d'accouplement (31), et, dans la disposition de verrouillage, il n'immobilise la pièce d'accouplement père (12, 14) que contre un déplacement radial par rapport à la pièce d'accouplement mère (13, 15).

2. Raccord selon la revendication 1, caractérisé en ce que le bord de prise est constitué par une rainure annulaire (16) dans la pièce d'accouplement père (12, 14).

3. Raccord selon la revendication 2, caractérisé en ce que la largeur de la rainure (16) de la pièce d'accouplement père (12, 14) est plus grande que celle de la section de bride radiale.

4. Raccord selon l'une des revendications 1 à 3, caractérisé on ce que les pièces d'accouplement (12 à 15, 56) sont de forme identique, et le seqment circulaire d'accouplement (31) est une pièce formée à part, qui peut être liée solidement à une pièce d'accouplement.

5. Raccord selon la revendication 4, caractérisé en ce que le segment circulaire (31) a une section en forme de U, avec des côtés qui peuvent être introduits dans les rainures (16) des pièces d'accouplement.

6. Raccord selon l'une des revendications 1 à 5, caractérisé en ce que le segment circulaire d'accouplement (31) est relié à un dispositif d'actionnement (47 à 51) pour le mettre à volonté en prise dans les rainures (16) des pièces d'accouplement réunies.

7. Raccord selon la revendication 6, caractérisé en ce que le segment circulaire d'accouplement (31) est articulé sur un levier (47) à deux bras, ce levier (47) présente une lumière allongée (48) dans laquelle passe une tige (49) reliée à au moins une barre de fixation (50, 51) du segment circulaire d'accouplement, et il est prévu un organe de guidage (53) qui guide le segment circulaire d'accouplement (31) dans son déplacement pour s'écarter ou se rapprocher des pièces d'accouplement.

8. Raccord selon l'une des revendications 1 à 7, caractérisé en ce qu'il est utilisé dans un dispositif répartiteur dans lequel plusieurs pièces d'accouplement pères (12, 14) sont disposées de façon fixe de telle sorte que les pièces adjacentes sont séparées par des intervalles égaux et que leurs faces frontales (19) se trouvent dans un même plan, et dans lequel deux pièces d'accouplement mères (13, 15), sont montées, avec des segments circulaires d'accouplement (31), aux extrémités d'un coude tubulaire à 180° et sont écartées les unes des autres d'un intervalle correspondant à celui de deux pièces d'accouplement pères adjacentes.

9. Raccord selon l'une des revendications 1 à 7, caractérisé en ce qu'il est utilisé dans un dispositif répartiteur dans lequel plusieurs pièces d'accouplement pères fixes (12, 14, 56) sont disppsées sur un arc de cercle avec leurs faces frontales (19) dans un même plan, dans lequel une autre pièce d'accouplement fixe est placée au centre du cercle et peut êre raccordé à une autre pièce d'accouplement avec rotation possible, cette autre pièce étant placée à l'extrémité d'un coude tubulaire à 180°, l'autre extrémité de ce coude portant une pièce d'accouplement mère qui peut être raccordée, au choix, à l'une ou l'autre des pièces d'accouplement pères fixes.

10. Raccord selon la revendication 9, caractérisé en ce que les pièces d'accouplement de l'accouplement central sont raccordées au moyen de deux segments circulaires (31) sur lesquels est enfilé un anneau d'arrêt (44) qui ne peut pas coulisser axialement.

11. Raccord selon la revendication 10, caractérisé en ce qu'un disque (57) est lié au coude tubulaire (21) et porte à sa périphérie une denture (60) destinée à coopérer avec un pignon ou une chaîne d'entraînement.

12. Raccord selon la revendication 10 ou 11, caractérisé en ce que le disque d'entraînement (57) est en même temps un disque d'étanchéité qui vient porter sur les pièces d'accouplement pères qui sont ouvertes.

13. Raccord selon la revendication 1, caractérisé en ce que l'élément de verrouillage est monté diamétralement opposé au segment circulaire d'accouplement (79) sur le côté extérieur de la pièce d'accouplement mère (74), et mobile parallèlement à l'axe d'accouplement, et il est précontraint à l'aide d'un ressort dans une position de verrouillage où un secteur de verrouillage dépasse la face frontale de la pièce d'accouplement femelle.

14. Raccord selon la revendication 1, caractérisé en ce qu'un conducteur de raccordement (93) relié à un conducteur électrique (85) est monté sur le segment circulaire d'accouplement (79) en étant isolé, un anneau de contact (88) est monté sur la pièce de raccordement père (75) en étant isolé, et un contact (92) relié à un conducteur de raccordement vient en appui sur cet anneau de contact (88) quand les pièces d'accouplement (74, 75) sont raccordées.

15. Raccord selon la revendication 14, caractérisé en ce qu'une plaque de carter (90, 100) est placée sur la face externe du segment circulaire d'accouplement (79) et maintient avec isolation un ressort de contact (92, 105) contre le segment circulaire d'accouplement.

# FIG. 1

# FIG. 2

FIG. 3

# FIG. 4

# FIG. 5

## FIG. 7

## FIG. 6

0 089 638

FIG. 8

FIG. 9